# EUROPEAN PATENT APPLICATION

(11) **EP 4 794 391 A1**
(43) Date of publication of application: **19.08.2026**
(21) Application number: 24884544.8
(22) Date of filing: 23.10.2024
(51) Int. Cl.: H04W 36/08

(54) **DOWNLINK CARRIER HANDOVER METHOD, COMMUNICATION APPARATUS, AND STORAGE MEDIUM**

(30) Priority: 30.10.2023 CN 202311428220
(71) Applicant: HUAWEI TECHNOLOGIES CO., LTD., Shenzhen 518129 (CN)
(72) Inventor: ZHAI, Bangzhao, Shenzhen, Guangdong 518129 (CN); HUANG, Xiuxuan, Shenzhen, Guangdong 518129 (CN); LI, Xinxian, Shenzhen, Guangdong 518129 (CN); DING, Mengying, Shenzhen, Guangdong 518129 (CN); PENG, Jinlin, Shenzhen, Guangdong 518129 (CN)
(74) Representative: Pfenning, Meinig & Partner mbB
(86) International application number: PCT/CN2024/126764
(87) International publication number: WO 2025/092540

(57) **Abstract**

A downlink carrier switching method, a communication apparatus, and a storage medium are provided. A target secondary cell in which downlink transmission occurs is dynamically indicated by downlink control information. When secondary cell switching occurs, a terminal only needs to switch a corresponding downlink radio frequency receiver to the target secondary cell, resulting in a short switching delay. This enables the terminal to dynamically use a preferred carrier resource within a limited capability, implementing dynamic and fast switching, shortening the switching delay, and allowing for quick adaptation to dynamic changes of channels and loads on different carriers.

## Description

This application claims priority to Chinese Patent Application No. 202311428220.X, filed with the China National Intellectual Property Administration on October 30, 2023 and entitled "DOWNLINK CARRIER SWITCHING METHOD, COMMUNICATION APPARATUS, AND STORAGE MEDIUM", which is incorporated herein by reference in its entirety.

### TECHNICAL FIELD

This application relates to the communication field, and in particular, to a downlink carrier switching method, a communication apparatus, and a storage medium.

### BACKGROUND

In a carrier aggregation (carrier aggregation, CA) scenario, a network device may activate a plurality of serving cells for a single terminal. However, limited by cost constraints, the terminal can support a limited quantity of cells simultaneously. Therefore, it is necessary to enable the terminal to flexibly use a preferred carrier resource within a limited capability, so that carriers used by the terminal for data transmission can dynamically adapt to dynamic changes of channels and loads on different carriers.

### SUMMARY

This application provides a downlink carrier switching method, a communication apparatus, and a storage medium, to implement dynamic and fast carrier switching, so that carriers for data transmission can dynamically adapt to dynamic changes of channels and loads on different carriers.

According to a first aspect, a downlink carrier switching method is provided. The method is implemented by a terminal, or a circuit or a chip used in the terminal.

The method includes: receiving downlink control information in a primary cell in a first time unit, where the downlink control information is used for scheduling transmission of a physical downlink shared channel in a target secondary cell; and switching from a source secondary cell to the target secondary cell in a second time unit based on the downlink control information, to receive the physical downlink shared channel, where the second time unit is an N^{th} time unit after the first time unit, and N is an integer greater than or equal to 0.

According to the method, a target secondary cell in which downlink transmission occurs is dynamically indicated by the downlink control information. When secondary cell switching occurs, the terminal only needs to switch a corresponding downlink radio frequency receiver to the target secondary cell, resulting in a short switching delay. This enables the terminal to dynamically use a preferred carrier resource within a limited capability, implementing dynamic and fast switching, shortening the switching delay, and allowing for quick adaptation to dynamic changes of channels and loads on different carriers.

In a possible implementation, the method further includes: sending first information, where the first information includes a cell switching gap, the cell switching gap indicates time required for switching from the source secondary cell to the target secondary cell, and the cell switching gap is based on a hardware capability of the terminal.

In this implementation, the terminal may report, to a network device, the cell switching gap supported by the terminal, so that the network device can calculate, based on the cell switching gap, a time unit in which the physical downlink shared channel in the target secondary cell is located.

In another possible implementation, N is an integer greater than 0, the second time unit includes the cell switching gap, and N is associated with at least one of the following: the cell switching gap, an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and K0 corresponding to the target secondary cell is greater than K0 corresponding to the source secondary cell, where K0 is a slot offset between the physical downlink control channel and a physical downlink shared channel scheduled by using the physical downlink control channel.

In this implementation, the network device may schedule downlink transmission in a secondary cell across time units. A time offset between the second time unit and the first time unit can be accurately determined, so that carrier switching can be accurately performed. K0 corresponding to the target secondary cell is set to be greater than K0 corresponding to the source secondary cell, so that the source secondary cell has stopped transmission when the terminal switches the radio frequency receiver to receive a signal from the target secondary cell.

In still another possible implementation, N is an integer greater than 0, the first time unit includes the cell switching gap, and N is associated with at least one of the following: an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and K0 corresponding to the target secondary cell is greater than K0 corresponding to the source secondary cell, where K0 is a slot offset between the physical downlink control channel and a physical downlink shared channel scheduled by using the physical downlink control channel.

In this implementation, the network device may schedule downlink transmission in a secondary cell across time units. A time offset between the second time unit and the first time unit can be accurately determined, so that carrier switching can be accurately performed. K0 corresponding to the target secondary cell is set to be greater than K0 corresponding to the source secondary cell, so that the source secondary cell has stopped transmission when the terminal switches the radio frequency receiver to receive a signal from the target secondary cell. A downlink transmission resource indicated by downlink control information of the source secondary cell is empty.

In still another possible implementation, N=0, the second time unit includes the cell switching gap, the downlink control information further includes a start and length indicator value of the physical downlink shared channel, the start and length indicator value is greater than a first threshold, and the first threshold is associated with the cell switching gap.

In this implementation, the network device may schedule downlink transmission in a secondary cell in a same time unit. The start and length indicator value is set to be greater than the first threshold, and the first threshold is associated with the cell switching gap, so that the radio frequency receiver of the terminal has sufficient time for blind detection and parsing of the downlink control information.

In still another possible implementation, the downlink control information includes an identifier of the target secondary cell.

In still another possible implementation, a quantity of target secondary cells is less than or equal to a maximum quantity of physical downlink shared channels that the terminal can process.

According to a second aspect, another downlink carrier switching method is provided. The method is implemented by a network device, or a circuit or a chip used in the network device.

The method includes: sending downlink control information in a primary cell in a first time unit, where the downlink control information is used for scheduling transmission of a physical downlink shared channel in a target secondary cell; and sending the physical downlink shared channel in the target secondary cell in a second time unit based on the downlink control information, where the second time unit is an N^{th} time unit after the first time unit, and N is an integer greater than or equal to 0.

According to the method, a target secondary cell in which downlink transmission occurs is dynamically indicated by the downlink control information. When secondary cell switching occurs, a terminal only needs to switch a corresponding downlink radio frequency receiver to the target secondary cell, resulting in a short switching delay. This enables the terminal to dynamically use a preferred carrier resource within a limited capability, implementing dynamic and fast switching, shortening the switching delay, and allowing for quick adaptation to dynamic changes of channels and loads on different carriers.

In a possible implementation, the method further includes: receiving first information, where the first information includes a cell switching gap, the cell switching gap indicates time required for switching from a source secondary cell to the target secondary cell, and the cell switching gap is based on a hardware capability of the terminal.

In another possible implementation, N is an integer greater than 0, the second time unit includes the cell switching gap, and N is associated with at least one of the following: the cell switching gap, an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and K0 corresponding to the target secondary cell is greater than K0 corresponding to the source secondary cell, where K0 is a slot offset between the physical downlink control channel and a physical downlink shared channel scheduled by using the physical downlink control channel.

In still another possible implementation, N is an integer greater than 0, the first time unit includes the cell switching gap, and N is associated with at least one of the following: an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and K0 corresponding to the target secondary cell is greater than K0 corresponding to the source secondary cell, where K0 is a slot offset between the physical downlink control channel and a physical downlink shared channel scheduled by using the physical downlink control channel.

In still another possible implementation, N=0, the second time unit includes the cell switching gap, the downlink control information further includes a start and length indicator value of the physical downlink shared channel, the start and length indicator value is greater than a first threshold, and the first threshold is associated with the cell switching gap.

In still another possible implementation, the downlink control information includes an identifier of the target secondary cell.

In still another possible implementation, a quantity of target secondary cells is less than or equal to a maximum quantity of physical downlink shared channels that the terminal can process.

The method in the first aspect may be performed by a terminal or a module (for example, a processor, a chip, or a chip system) used in the terminal, or may be implemented by a logical node, a logical module, or software that can implement all or a part of functions of the terminal.

The method in the second aspect may be performed by a network device or a module (for example, a processor, a chip, or a chip system) used in the network device, or may be implemented by a logical node, a logical module, or software that can implement all or a part of functions of the network device.

According to a third aspect, a communication apparatus is provided, and is configured to implement the downlink carrier switching method in any one of the first aspect or the implementations of the first aspect. The apparatus may be a terminal or a module (for example, a processor, a chip, or a chip system) used in the terminal, or may be a logical node, a logical module, or software that can implement all or a part of functions of the terminal.

According to a fourth aspect, a communication apparatus is provided, and is configured to implement the downlink carrier switching method in any one of the second aspect or the implementations of the second aspect. The apparatus may be a network device or a module (for example, a processor, a chip, or a chip system) used in the network device, or may be a logical node, a logical module, or software that can implement all or a part of functions of the network device.

In a possible implementation, the communication apparatus in the third aspect or the fourth aspect includes a module configured to perform the method in any one of the first aspect and the second aspect or the implementations of the first aspect and the second aspect.

In another possible implementation, the communication apparatus in the third aspect or the fourth aspect includes a processor coupled to a memory. The processor is configured to implement a corresponding function in the foregoing downlink carrier switching method, and the method is performed by the apparatus. The memory is configured to be coupled to the processor, and stores a program (instructions) and/or data necessary for the apparatus. Optionally, the communication apparatus may further include a communication interface configured to implement communication between the apparatus and another network element. Optionally, the memory may be located inside the communication apparatus, or may be located outside the communication apparatus.

In still another possible implementation, the communication apparatus in the third aspect or the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is a transceiver circuit or an input/output interface.

When the communication apparatus in the third aspect or the fourth aspect is a chip, a sending unit may be an output unit, for example, an output circuit or a communication interface; and a receiving unit may be an input unit, for example, an input circuit or a communication interface. When the communication apparatus is a terminal, a sending unit may be a transmitter device or a transmitter; and a receiving unit may be a receiver device or a receiver.

According to a fifth aspect, a computer-readable storage medium is provided. The computer-readable storage medium stores a computer program or instructions. When the computer program or the instructions are executed, the method according to the foregoing aspects is implemented.

According to a sixth aspect, a computer program product including instructions is provided. When the instructions are run on a communication apparatus, the communication apparatus is caused to perform the method according to the foregoing aspects.

According to a seventh aspect, a communication system is provided. The communication system includes the communication apparatus according to the third aspect and the communication apparatus according to the fourth aspect.

### BRIEF DESCRIPTION OF DRAWINGS

FIG. 1 is a diagram of an architecture of a communication system 1000 to which an embodiment of this application is applied;
FIG. 2 is a diagram of carrier aggregation;
FIG. 3 is a diagram of cell switching based on a layer 1/layer 2 mobility technology;
FIG. 4 is a diagram of an uplink carrier switching technology;
FIG. 5 is a schematic flowchart of a downlink carrier switching method according to an embodiment of this application;
FIG. 6 is a diagram of an example in which a PCell schedules downlink transmission in an SCell across time units according to an embodiment of this application;
FIG. 7 is a diagram of an example of data scheduling according to an embodiment of this application;
FIG. 8 is a diagram of another example in which a PCell schedules an SCell across time units according to an embodiment of this application;
FIG. 9 is a diagram of an example in which a PCell schedules an SCell in a same time unit according to an embodiment of this application;
FIG. 10 is a diagram of another example of data scheduling according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

With reference to accompanying drawings, the following further describes solutions provided in this application.

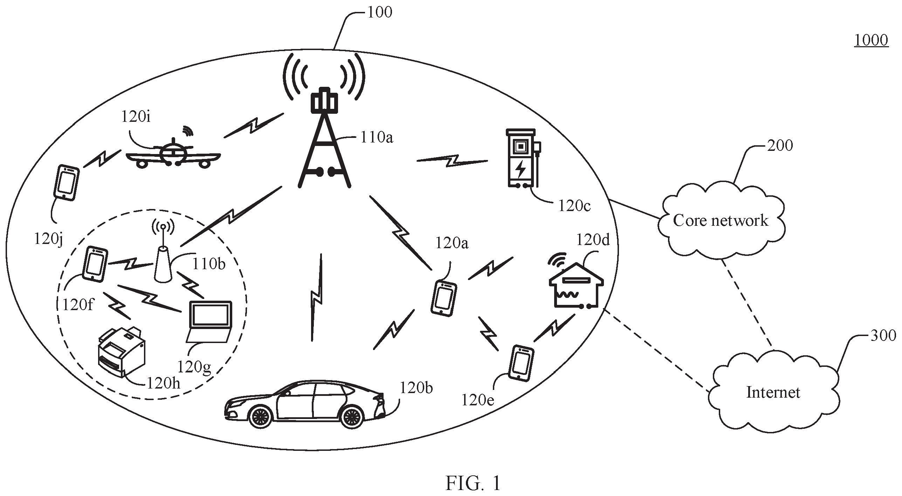

A downlink carrier switching method provided in embodiments of this application may be applied to a wireless communication system such as 5G, 6G, or satellite communication. A communication system 1000 includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. Mutual connections between terminals and between RAN nodes may be implemented in a wired or wireless manner. The communication system 1000 may further include a core network 200. The RAN node 110 is connected to the core network 200 in a wired or wireless manner. A core network device in the core network 200 and the RAN node 110 in the RAN 100 may be different independent physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN). The RAN node, also referred to as a radio access network device, a RAN entity, or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next-generation base station in a 6th generation (6th generation, 6G) mobile communication system, or a base station in a future mobile communication system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help the terminal implement radio access, and different RAN nodes separately implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). Further, the CU may be divided into two types of RAN nodes of a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following uses a base station as an example of the RAN node for description.

The terminal is a device having a wireless transceiver function, and may send a signal to the base station or receive a signal from the base station. The terminal may also be referred to as a terminal device, a user equipment (user equipment, UE), a mobile station, a mobile terminal, or the like. The terminal may be widely used in various scenarios, such as device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or mobile. The base station and the terminal may be deployed on land, including an indoor or outdoor device, a handheld device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for a base station 110a, 120i is a terminal. In other words, 110a and 120i communicate with each other according to a radio air interface protocol. Certainly, 110a and 120i may alternatively communicate with each other according to an interface protocol between base stations. In this case, for 110a, 120i is also a base station. Therefore, both the base station and the terminal may be collectively referred to as communication apparatuses. 110a and 110b in FIG. 1 may be referred to as communication apparatuses having a function of the base station, and 120a to 120j in FIG. 1 may be referred to as communication apparatuses having a function of the terminal.

In embodiments of this application, the base station is also referred to as a network device. An apparatus configured to implement a function of the network device may be a network device, or may be an apparatus that can support the network device in implementing the function, for example, a chip system, a hardware circuit, a software module, or a combination of a hardware circuit and a software module. The apparatus may be mounted in the network device or used together with the network device. In embodiments of this application, an example in which the apparatus configured to implement the function of the network device is a network device is merely used for description, and constitutes no limitation on the solutions in embodiments of this application.

It may be understood that, this application may be applied to communication between a network device and a terminal.

Communication between the network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a PDCP layer, a radio link control (radio link control, RLC) layer, a MAC layer, and a physical layer. For example, the user plane protocol layer structure may include functions of protocol layers such as a PDCP layer, an RLC layer, a MAC layer, and a physical layer. In a possible implementation, an SDAP layer may be further included above the PDCP layer.

Optionally, the protocol layer structure between the network device and the terminal may further include an artificial intelligence (artificial intelligence, AI) layer for transmission of data related to an AI function.

Data transmission between the network device and the terminal is used as an example. Data transmission needs to pass through a user plane protocol layer, for example, pass through the SDAP layer, the PDCP layer, the RLC layer, the MAC layer, or the physical layer. The SDAP layer, the PDCP layer, the RLC layer, the MAC layer, and the physical layer may also be collectively referred to as an access stratum. A data transmission direction is divided into sending or receiving, and therefore each layer is further divided into a sending part and a receiving part. Downlink data transmission is used as an example. After obtaining data from an upper layer, the PDCP layer transmits the data to the RLC layer and the MAC layer. The MAC layer generates a transport block, and then performs wireless transmission through the physical layer. The data is correspondingly encapsulated at each layer. For example, data received by a specific layer from an upper layer of the layer is considered as a service data unit (service data unit, SDU) of the layer, encapsulated by the layer into a protocol data unit (protocol data unit, PDU), and then transferred to a next layer.

For example, the terminal may further have an application layer and a non-access stratum. The application layer may be used for providing a service for an application installed on the terminal. For example, downlink data received by the terminal may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

It should be understood that a quantity of devices and types of the devices in the communication system shown in FIG. 1 are merely used as an example. This application is not limited thereto. In actual application, the communication system may further include more terminals and more network devices, and may further include another network element, for example, a core network device and/or a network element configured to implement an artificial intelligence function.

It may be understood that all or a part of functions implemented by one or more of the terminal, the network device, the core network device, or the network element configured to implement the artificial intelligence function may be virtualized, that is, implemented by one or more of a dedicated processor or a general-purpose processor and a corresponding software module. Because the terminal and the network device are related to an interface for air interface transmission, a transceiver function of the interface may be implemented by hardware. Core network devices such as an operations, administration, and maintenance (operations, administration, and maintenance, OAM) network element can all be virtualized. Optionally, one or more functions of the virtualized terminal, network device, core network device, or network element configured to implement the artificial intelligence function may be implemented by a cloud device, for example, a cloud device in an over-the-top (over-the-top, OTT) system.

First, a concept of carrier aggregation in embodiments of this application is described.

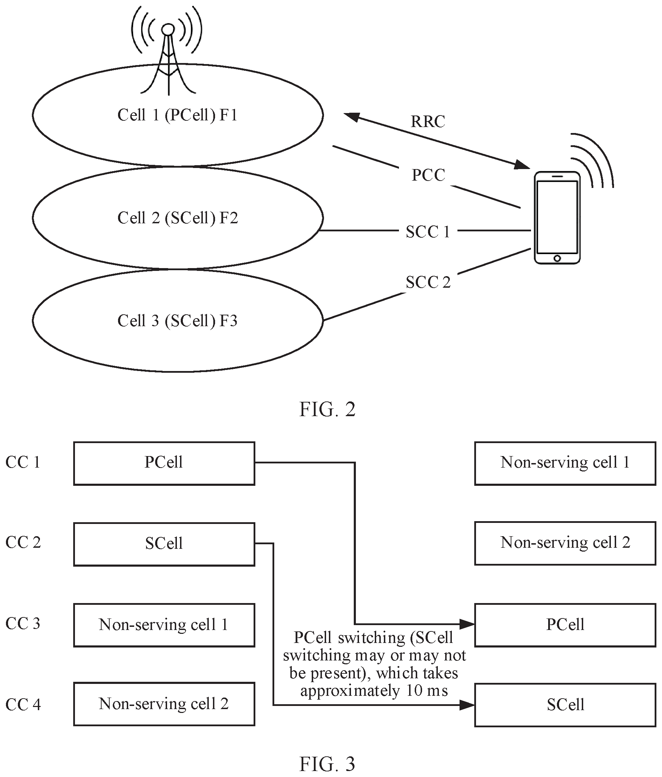

The carrier aggregation technology is a key technology for resolving a problem of limited bandwidth of a single carrier, and aggregating two or more carrier units together to serve a terminal, to support larger transmission bandwidth. FIG. 2 is a diagram of carrier aggregation in which a primary carrier (primary component carrier, PCC), a secondary carrier (secondary component carrier, SCC) 1, and an SCC 2 are aggregated together to serve a terminal.

In carrier aggregation, there may be a plurality of cells that provide services for a single UE. In other words, one UE may have a plurality of serving cells, including one primary cell (primary cell, PCell) and one or more secondary cells (secondary cells, SCells).

The PCell is a cell in which the UE performs initial connection establishment, a cell in which the UE performs RRC connection re-establishment, or a primary cell specified by the UE in a handover (handover) process. The PCell is responsible for RRC communication with the UE. A carrier unit corresponding to the PCell is referred to as a primary carrier, where a downlink carrier of the PCell is referred to as a downlink primary carrier (DL PCC), and an uplink carrier of the PCell is referred to as an uplink primary carrier (UL PCC).

The SCell is added during RRC re-configuration of the UE, to provide an additional radio resource. There is no RRC communication between the SCell and the UE. A carrier unit corresponding to the SCell is referred to as a secondary carrier, where a downlink carrier of the SCell is referred to as a downlink secondary carrier (DL SCC), and an uplink carrier of the SCell is referred to as an uplink secondary carrier (UL SCC).

One serving cell may include only one downlink carrier, may include one downlink carrier and one uplink carrier, or may include one downlink carrier and two uplink carriers. Therefore, one serving cell may be in one-to-one correspondence with one downlink carrier, and therefore concepts of the carrier (which is referred to as the downlink carrier unless otherwise specified) and the cell are interchangeable in this application.

Currently, most carrier resources available to a network side are four component carriers (component carriers, CCs) to five CCs, and it is expected that more frequency bands are available in the future. For example, five CCs are currently available, which are specifically two CCs at 2.6G, two CCs at 4.9G, and one CC at 700M. In the future, as one CC at 1.8G, one CC in an F frequency band, one CC in an A frequency band, and several CCs at U6G are available, it is expected that more carrier resources are available.

However, due to a cost constraint limitation, a quantity of cells that can be simultaneously scheduled for the terminal is limited (that is, a maximum quantity of physical downlink shared channels (physical downlink shared channels, PDSCHs) that a baseband of the terminal can process is limited), and consequently a quantity of carriers that can be simultaneously supported is limited. Specifically, each PDSCH needs an independent baseband processing unit, for example, an FFT data buffer or a post-fast Fourier transform data buffer (post-FFT data buffer). A larger quantity of cells that can be simultaneously scheduled (that is, a larger quantity of PDSCHs that can be simultaneously processed) indicates higher baseband implementation costs. Currently, most terminals have a CA capability of only two CCs, or even do not support CA.

In conclusion, a quantity of cells configured by the current network side is far greater than the quantity of cells that can be simultaneously scheduled for the terminal. To maximize user experience, it is necessary to enable the terminal to flexibly use a preferred carrier resource within a limited capability.

A technology for scheduling the cell is an L1/L2-triggered mobility (L1/L2-triggered mobility, LTM) technology. In the technology, the network side configures a plurality of serving cells for the terminal, where a quantity of configured serving cells is greater than the quantity of cells that can be simultaneously scheduled for the terminal, and only an activated serving cell is counted to consumption of the capability of the terminal. FIG. 3 is a diagram of cell switching based on the LTM technology. The network side configures a total of four serving cells: a CC 1 to a CC 4 for the terminal, and the quantity of cells that can be simultaneously scheduled for the terminal is 2. When the network side uses the LTM technology to indicate cell switching by using layer 2 signaling, a CC corresponding to a PCell is switched. In FIG. 3, the CC corresponding to the PCell is switched from the CC 1 to the CC 3. When the CC corresponding to the PCell is switched, a CC corresponding to a SCell may change or remain unchanged. In FIG. 3, the CC corresponding to the SCell is switched from the CC 2 to the CC 4. Cell switching is indicated by the layer 2 signaling, with switching time of approximately 10 ms. The layer 2 signaling includes a medium access control-control element (medium access control-control element, MAC CE) activation signal, which takes approximately 5 ms; ASN.1 decoding time and layer 2/layer 3 re-configuration (L2/3 re-cfg.) time, which takes approximately 1 ms to 6 ms; and baseband retuning (BB retuning) time and radio frequency retuning (RF retuning) time, which takes approximately 1 ms to 2 ms. However, it can be learned from the foregoing descriptions that, for the LTM technology, during cell switching, PCell switching needs to be performed, and a scenario in which only SCell switching is performed is not supported.

Another technology for indicating cell switching may support only SCell switching, which is performed by using layer 3 (layer 3, L3) signaling procedures, including radio resource control re-configuration signaling (RRC re-configuration signaling), secondary cell activation (SCell activation), radio resource control complete signaling (RRC complete signaling), and the like, and a delay is approximately 50 ms, which is large.

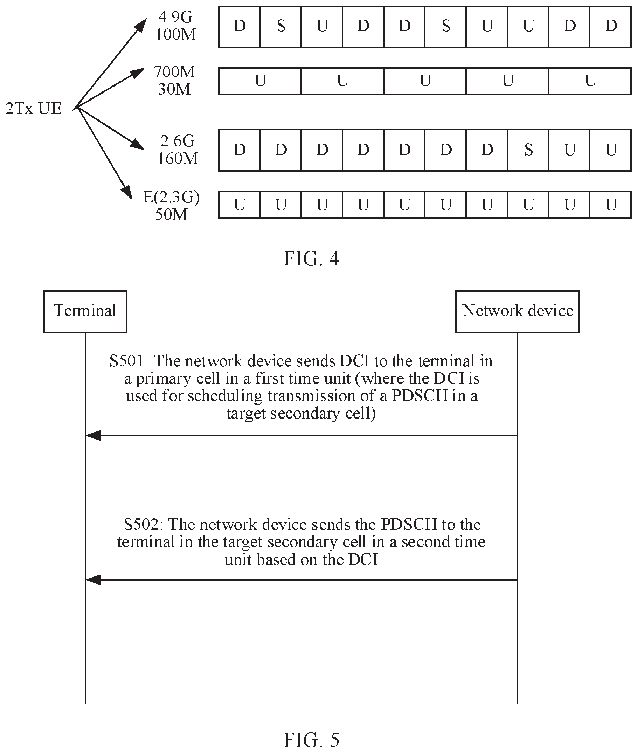

Still another technology is an uplink transmit switching (UL Tx switching) technology. FIG. 4 is a diagram of an uplink carrier switching technology. The network side configures a plurality of uplink serving cells for the terminal and activates the plurality of uplink serving cells, where a quantity of activated uplink serving cells is greater than or equal to a quantity of transmit antennas of the terminal. In the technology, the transmit antennas of the terminal switch between different cells through layer 1 signaling scheduling, so as to enable a limited quantity of transmit antennas of the terminal to dynamically switch between the plurality of cells, with interruption time of approximately hundreds of microseconds. However, the technology is essentially for resolving a problem that a quantity of uplink transmit antennas of the terminal is limited, and does not support cell switching when a quantity of cells that can be simultaneously scheduled for the terminal during downlink transmission is limited.

It can be learned that none of the foregoing technologies can fully and dynamically use a downlink spectrum resource, failing to enable the terminal to flexibly use the preferred carrier resource within the limited capability.

Therefore, this application provides a downlink carrier switching solution. A target secondary cell in which downlink transmission occurs is dynamically indicated by downlink control information. When secondary cell switching occurs, a terminal only needs to switch a corresponding downlink radio frequency receiver to the target secondary cell, resulting in a short switching delay. This enables the terminal to dynamically use a preferred carrier resource within a limited capability, implementing dynamic and fast switching, shortening the switching delay, and allowing for quick adaptation to dynamic changes of channels and loads on different carriers.

The following describes in detail the downlink carrier switching method provided in embodiments of this application.

FIG. 5 is a schematic flowchart of a downlink carrier switching method according to an embodiment of this application. For example, the method may include the following steps.

S501: A network device sends downlink control information (downlink control information, DCI) to a terminal in a primary cell in a first time unit. Correspondingly, the terminal receives the DCI in the primary cell in the first time unit.

In carrier aggregation, the network device may configure one or more serving cells (serving cells) for a single terminal. In other words, the terminal may have a plurality of serving cells, including one PCell and one or more SCells. The PCell is also referred to as a special cell (special cell, SpCell). A quantity of cells configured by the network device is far greater than a quantity of cells that can be simultaneously scheduled for the terminal, or a quantity of cells that can be simultaneously scheduled for the terminal is far less than a quantity of cells configured by the network device, that is, it is impossible to simultaneously schedule, for the terminal, all the cells configured by the network device. The quantity of cells that can be simultaneously scheduled for the terminal may also be referred to as a maximum quantity of PDSCHs that the terminal can process. The serving cell represents a wireless coverage area operating on a specific carrier to serve the terminal.

The network device may indicate, based on a channel, a load, or the like of the carrier, the terminal to perform carrier switching. In this embodiment, the network device does not switch the PCell, but indicates SCell switching in the PCell, which may also be referred to as the PCell indicating SCell switching. For example, the network device sends the DCI to the terminal in the PCell in the first time unit, where the DCI is used for scheduling transmission of a PDSCH in a target secondary cell, that is, indicates the terminal to switch from a source SCell to a target SCell, to receive the PDSCH in the target SCell. The source SCell may also be referred to as an SCell before the switching, and the target SCell may also be referred to as an SCell after the switching.

Further, the DCI may include an identifier of the target SCell. Each SCell has a unique identifier.

S502: The network device sends the PDSCH to the terminal in the target secondary cell in a second time unit based on the DCI. Correspondingly, the terminal receives the PDSCH in the target secondary cell in the second time unit based on the DCI.

After receiving the DCI, the terminal receives the PDSCH in the target SCell in the second time unit based on an indication of the DCI.

The second time unit is an N^{th} time unit after the first time unit, and N is an integer greater than or equal to 0.

Based on different scheduling scenarios, there may be the following several switching manners.

In an implementation, the PCell schedules downlink transmission in the SCell across time units. The PCell performs scheduling in the first time unit, to schedule the target SCell to transmit the PDSCH in the second time unit. Cross-time-unit scheduling is that a time offset N between the second time unit and the first time unit is an integer greater than 0. The time unit may be any one of a subframe, a slot, a mini-slot, a symbol, or the like. The following uses the time unit as a slot for description.

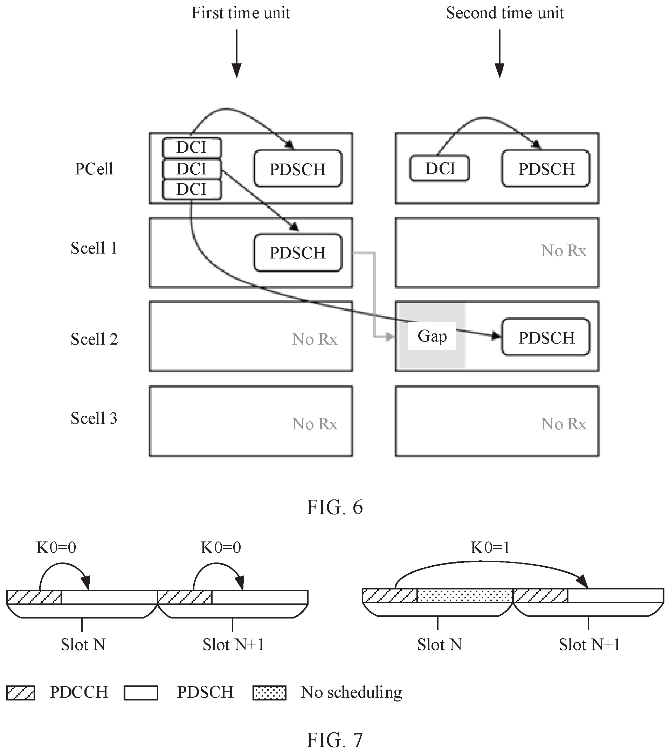

FIG. 6 is a diagram of an example in which the PCell schedules the SCell across the time units according to an embodiment of this application. In this implementation, in addition to scheduling downlink transmission in a cell of the PCell, the PCell may further schedule downlink transmission in the SCell. In FIG. 6, the network device configures the PCell and an SCell 1 to an SCell 3 for the terminal. A quantity of serving cells scheduled by the PCell at a same moment does not exceed the maximum quantity of PDSCHs that the terminal can process. In FIG. 6, the quantity of cells that can be simultaneously scheduled for the terminal is 2. In particular, in one or more slots before carrier switching occurs, in addition to scheduling transmission in an SCell (that is, the SCell before the switching or the source SCell in this embodiment) in a current slot, the PCell further schedules transmission in an SCell after the switching (that is, the target SCell in this embodiment) across slots. The PCell may schedule downlink transmission in the SCell by sending DCI signaling. After receiving cross-slot scheduling DCI sent by the network device, the terminal switches, after a corresponding slot, a radio frequency receiver (Rx) to a carrier indicated by the cross-slot scheduling DCI, and demodulates downlink data on a corresponding time-frequency resource indicated by the cross-slot scheduling DCI.

The terminal needs time to perform downlink (downlink, DL) Rx switching, where the time is referred to as a cell switching gap (switching gap, Gap for short), the switching gap indicates time required for switching from a source secondary cell to the target secondary cell. From a perspective of frame timing, in this implementation, the switching gap occurs on the carrier after the switching (SCell 2), that is, the second time unit includes the cell switching gap. For example, the terminal may report, to the network device, a cell switching gap supported by the terminal, for example, 210 µs. For example, the terminal sends first information to the network device, where the first information includes the cell switching gap. The cell switching gap is based on a hardware capability of the terminal.

When the PCell performs cross-slot scheduling in the SCell, the network device and the terminal calculate a quantity N of cross-slots by using the switching gap, that is, determine a slot in which a PDSCH on the carrier after the switching is located. N is associated with at least one of the following: the cell switching gap, an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell.

In an example, the slot in which the PDSCH on the carrier after the switching is located satisfies Formula 1: ${K}_{S} = \left⌊n⋅\frac{{2}^{μPDSCH}}{{2}^{μPDCCH}}\right⌋ + {K}_{0} + \left⌈\frac{{T}_{SwichingGap}}{1000}⋅{2}^{μPDSCH}\right⌉$

*n* is the index of the slot in which the DCI is located; *µPDSCH* is the numerology index of the carrier/bandwidth part (bandwidth part, BWP) on which the PDSCH is located; *µPDSCH* is the numerology index of the carrier/BWP on which the physical downlink control channel (physical downlink control channel, PDCCH) is located; $\left⌊n⋅\frac{{2}^{μPDSCH}}{{2}^{μPDCCH}}\right⌋$ is a corresponding slot index, under PDSCH numerology, converted from the index n of the slot of the DCI; *T_{SwitchingGap}* is the cell switching gap; and K0 is a slot offset between the PDCCH and a PDSCH scheduled by using the PDCCH. FIG. 7 is a diagram of an example of data scheduling according to an embodiment of this application. When K0=0, it indicates that the PDCCH is used for scheduling a PDSCH in a same slot. Alternatively, when K0=1, it indicates that the PDCCH is used for scheduling a PDSCH in a next slot.

K0 of the target SCell (SCell 2) is greater than or equal to K0 of the source SCell (SCell 1), thereby ensuring that the source SCell (SCell 1) has stopped transmission when Rx switching is performed.

In another implementation, the PCell schedules downlink transmission in the SCell across time units. The PCell performs scheduling in the first time unit, to schedule the target SCell to transmit the PDSCH in the second time unit. Cross-time-unit scheduling is that a time offset N between the second time unit and the first time unit is an integer greater than 0. The time unit may be any one of a subframe, a slot, a mini-slot, a symbol, or the like. The following uses the time unit as a slot for description.

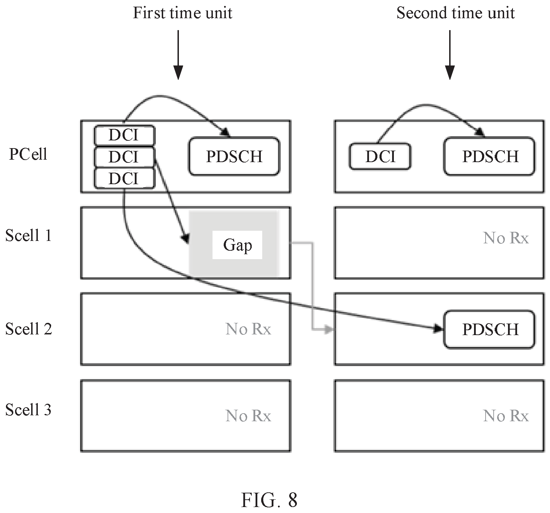

FIG. 8 is a diagram of another example in which the PCell schedules the SCell across the time units according to an embodiment of this application. Similar to the foregoing implementation, in this implementation, in addition to scheduling downlink transmission in a cell of the PCell, the PCell may further schedule downlink transmission in the SCell. In FIG. 8, the network device configures the PCell and an SCell 1 to an SCell 3 for the terminal. A quantity of serving cells scheduled by the PCell at a same moment does not exceed a maximum quantity of PDSCHs that the terminal can process. In FIG. 8, a quantity of cells that can be simultaneously scheduled for the terminal is 2. In particular, in one or more slots before carrier switching occurs, in addition to scheduling transmission in an SCell (that is, the SCell before the switching or the source SCell in this embodiment) in a current slot, the PCell further schedules transmission in an SCell after the switching (that is, the target SCell in this embodiment) across slots. The PCell may schedule downlink transmission in the SCell by sending DCI signaling. After receiving cross-slot scheduling DCI sent by the network device, the terminal switches, after a corresponding slot, an Rx to a carrier indicated by the cross-slot scheduling DCI, and demodulates downlink data on a corresponding time-frequency resource indicated by the cross-slot scheduling DCI.

Because the terminal needs time to perform DL Rx switching, where the time is referred to as a switching gap, the switching gap indicates time required for switching from a source secondary cell to the target secondary cell. From a perspective of frame timing, a difference from the foregoing implementation is that in this implementation, the switching gap occurs on the carrier (SCell 1) before the switching, that is, the first time unit includes the switching gap. In this case, a PDSCH resource indicated by the DCI for scheduling the carrier (SCell 1) before the switching is empty. For example, the terminal may report, to the network device, a cell switching gap supported by the terminal, for example, 210 µs. For example, the terminal sends first information to the network device, where the first information includes the cell switching gap. The cell switching gap is based on a hardware capability of the terminal.

When the PCell performs cross-slot scheduling in the SCell, the network device and the terminal calculate a quantity N of cross-slots by using the switching gap, that is, determine a slot in which a PDSCH on the carrier after the switching is located. N is associated with at least one of the following: an index of a slot in which the DCI is located, a numerology index of a carrier or a bandwidth part on which the PDSCH is located, a numerology index of a carrier or a bandwidth part on which a PDCCH carrying the DCI is located, or K0 corresponding to the target secondary cell.

In an example, the slot in which the PDSCH on the carrier after the switching is located satisfies Formula 2: ${K}_{S} = \left⌊n⋅\frac{{2}^{μPDSCH}}{{2}^{μPDCCH}}\right⌋ + {K}_{0} + 1$

*n* is the index of the slot in which the DCI is located; *µPDSCH* is the numerology index of the carrier/BWP on which the PDSCH is located; *µPDSCH* is the numerology index of the carrier/BWP on which the PDCCH is located; $\left⌊n⋅\frac{{2}^{μPDSCH}}{{2}^{μPDCCH}}\right⌋$ is a corresponding slot index, under PDSCH numerology, converted from the index n of the slot of the DCI; and K0 is a slot offset between the PDCCH and a PDSCH scheduled by using the PDCCH.

K0 of the target SCell (SCell 2) is greater than or equal to K0 of the source SCell (SCell 1), thereby ensuring that the source SCell (SCell 1) has stopped transmission when Rx switching is performed.

In still another implementation, the PCell schedules downlink transmission in the SCell in a same time unit. The PCell performs scheduling in the first time unit, to schedule the target SCell to transmit the PDSCH in the second time unit. A time offset N between the second time unit and the first time unit is equal to 0, that is, first time unit=second time unit.

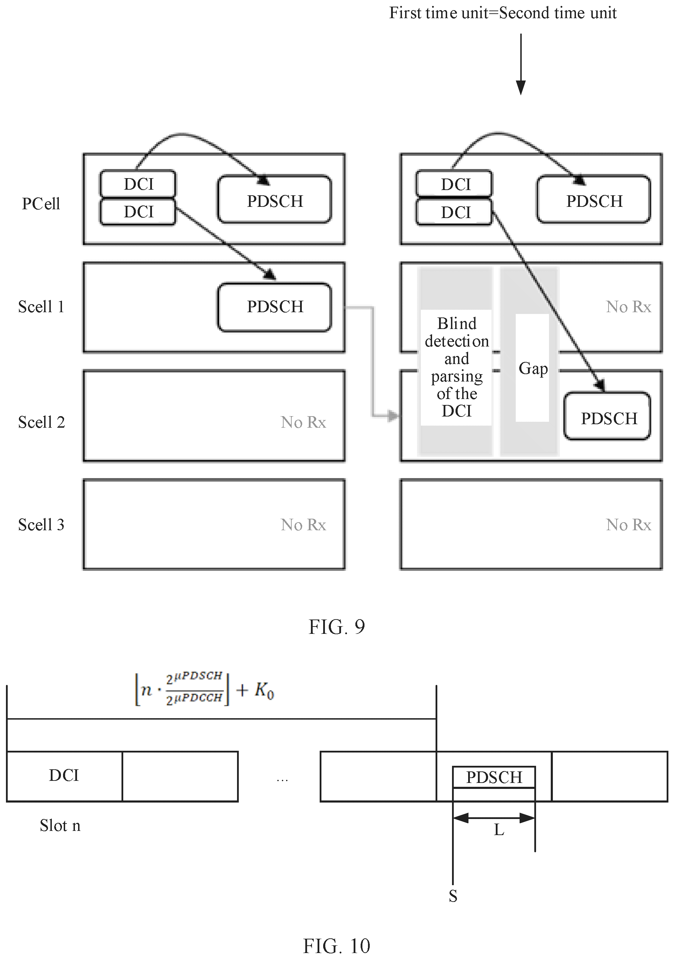

FIG. 9 is a diagram of an example in which the PCell schedules the SCell in the same time unit according to an embodiment of this application. In this implementation, in addition to scheduling downlink transmission in a cell of the PCell, the PCell may further schedule downlink transmission in the SCell. In FIG. 8, the network device configures the PCell and an SCell 1 to an SCell 3 for the terminal. A quantity of serving cells scheduled by the PCell at a same moment does not exceed a maximum quantity of PDSCHs that the terminal can process. In FIG. 6, a quantity of cells that can be simultaneously scheduled for the terminal is 2. In particular, the DCI is used for scheduling downlink transmission in the target SCell in the time unit, and the DCI further includes a start and length indicator value (start and length indicator value, SLIV) of the PDSCH. FIG. 10 is a diagram of another example of data scheduling according to an embodiment of this application. The SLIV is a start and length indicator value. The terminal may obtain an index value S of a start OFDM symbol of the PDSCH in a slot and a time domain length L of the PDSCH through calculation based on the SLIV value. In this implementation, the SLIV is greater than a first threshold, so that the Rx of the terminal has sufficient time for blind detection and parsing of the DCI. The first threshold is associated with a cell switching gap. For a meaning of the cell switching gap, refer to the foregoing descriptions.

According to the downlink carrier switching method provided in this embodiment of this application, an SCell in which PDSCH transmission occurs is dynamically indicated by the DCI signaling. When SCell switching occurs, the terminal only needs to switch a corresponding DL Rx to the target SCell, and the switching gap can be achieved at a level of hundreds of microseconds, so as to implement dynamic and fast switching, thereby better adapting to dynamic changes of channels and loads on various carriers and improving user experience. Compared with the conventional technology, in the method, layer 1 DCI signaling is used to indicate the SCell, and the terminal dynamically switches, based on the indication, a carrier on which the DL Rx is located, thereby implementing dynamic SCell switching.

It may be understood that, in this application, an example in which the network device and the terminal perform an interaction example is used for description. However, the execution bodies of the interaction example are not limited in this application. For example, the network device in the method provided in this application may alternatively be a chip, a chip system, or a processor used in the network device, or may be a logical node, a logical module, or software that can implement all or a part of functions of the network device. The terminal in the method provided in this application may alternatively be a chip, a chip system, or a processor used in the terminal, or may be a logical node, a logical module, or software that can implement all or a part of functions of the terminal.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that, in the foregoing embodiments, the method and/or steps implemented by a network device may alternatively be implemented by a component (for example, a chip or a circuit) that is used in the network device, and the method and/or steps implemented by a terminal may alternatively be implemented by a component (for example, a chip or a circuit) that is used in the terminal.

The foregoing mainly describes the solutions provided in embodiments of this application from a perspective of interaction between network elements. Correspondingly, embodiments of this application further provide a communication apparatus, and the communication apparatus is configured to implement the foregoing various methods. The communication apparatus may be the network device in the foregoing method embodiments, or may be a component that can be used in the network device. Alternatively, the communication apparatus may be the terminal in the foregoing method embodiments, or may be a component that can be used in the terminal. It may be understood that, to implement the foregoing functions, the communication apparatus includes a corresponding hardware structure and/or a corresponding software module for performing each function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application. However, it should not be considered that the implementation goes beyond the scope of this application.

In embodiments of this application, the communication apparatus may be divided into functional modules based on the foregoing method embodiments. For example, each functional module may be divided based on each corresponding function, or two or more functions may be integrated into one processing unit. The integrated module may be implemented in a form of hardware, or may be implemented in a form of a software functional module. It should be noted that, in embodiments of this application, division of the modules is an example, and is merely logical function division. During an actual implementation, there may be another division manner.

Based on a same concept as the foregoing downlink carrier switching method, this application further provides the following communication apparatus.

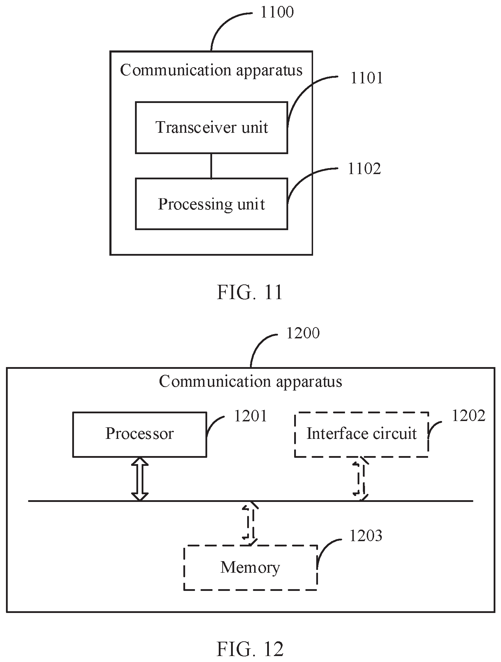

FIG. 11 is a diagram of a structure of a communication apparatus according to an embodiment of this application. The communication apparatus 1100 includes a transceiver unit 1101 and a processing unit 1102.

When the communication apparatus is configured to implement a function of the terminal in the foregoing method embodiments, the transceiver unit 1101 may be configured to perform operations of the terminal in step S501 and step S502 in the embodiment shown in FIG. 5.

When the communication apparatus is configured to implement a function of the network device in the foregoing method embodiments, the transceiver unit 1101 may be configured to perform operations of the network device in step S501 and step S502 in the embodiment shown in FIG. 5.

For specific implementations of the transceiver unit 1101 and the processing unit 1102, refer to descriptions in the foregoing method embodiments.

FIG. 12 is a diagram of a structure of another communication apparatus according to an embodiment of this application. The communication apparatus 1200 includes a processor 1201. Optionally, the communication apparatus 1200 may further include an interface circuit 1202 (represented by dashed lines in the figure). The processor 1201 and the interface circuit 1202 are coupled to each other. It may be understood that, the interface circuit 1202 may be a transceiver or an input/output interface. Optionally, the communication apparatus 1200 may further include a memory 1203 (represented by dashed lines in the figure). The memory 1203 is configured to store instructions executed by the processor 1201, store input data required by the processor 1201 to run the instructions, or store data generated after the processor 1201 runs the instructions. The processor 1201 is configured to implement a function of the processing unit 1102 in the embodiment shown in FIG. 11, and the interface circuit 1202 is configured to implement a function of the transceiver unit 1101 in the embodiment shown in FIG. 11.

When the foregoing communication apparatus is a chip used in a network device, the chip implements a function of the network device in the foregoing method embodiments. The chip receives information from another module (for example, a radio frequency module or an antenna) in the network device, where the information is sent by a terminal to the network device. Alternatively, the chip sends information to another module (for example, a radio frequency module or an antenna) in the network device, where the information is sent by the network device to a terminal.

When the foregoing communication apparatus is a chip used in a terminal, the chip implements a function of the terminal in the foregoing method embodiments. The chip receives information from another module (for example, a radio frequency module or an antenna) in the terminal, where the information is sent by a network device to the terminal. Alternatively, the chip sends information to another module (for example, a radio frequency module or an antenna) in the terminal, where the information is sent by the terminal to a network device.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (which corresponds to the foregoing receiving operation) and an output operation (which corresponds to the foregoing sending operation); and the processing unit is an integrated processor, a microprocessor, or an integrated circuit.

In this application, division of the modules is an example, and is merely logical function division. During an actual implementation, there may be another division manner. In addition, functional modules in the examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

When the foregoing communication apparatus is a module used in a base station, the module in the base station implements a function of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip of the base station, a CU, a DU, or another module, or may be an apparatus in an open radio access network (open radio access network, O-RAN) architecture, for example, an apparatus like an open CU or an open DU.

It should be noted that, one or more of the foregoing modules or units may be implemented by software, hardware, or a combination thereof. When any one of the foregoing modules or units is implemented by software, the software exists in a manner of computer program instructions, and is stored in a memory. A processor may be configured to execute the program instructions and implement the foregoing method procedure.

In this application, the processor may be a general-purpose processor, a digital signal processor, an application-specific integrated circuit, a field programmable gate array or another programmable logic device, a discrete gate, a transistor logic device, or a discrete hardware component, and may implement or perform the methods, steps, and logical block diagrams disclosed in this application. The general-purpose processor may be a microprocessor, any conventional processor, or the like. The steps of the methods disclosed with reference to this application may be directly performed and completed by a hardware processor, or may be performed and completed by a combination of hardware and a software module in the processor.

When the foregoing modules or units are implemented by hardware, the hardware may be any one or any combination of a CPU, a microprocessor, a DSP, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include the chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer. However, this is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

"At least one piece (item)" in this application indicates one piece (item) or a plurality of pieces (items). "A plurality of pieces (items)" means two or more pieces (items). "And/or" describes an association relationship between associated objects, and indicates that three relationships may exist. For example, A and/or B may indicate the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "include", "have", and any variations thereof mentioned above are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that, in this application, words such as "example" or "for example" are used for representing giving an example, an illustration, or a description. Any method or design scheme described as an "example" or "for example" in this application should not be construed as being preferred or having more advantages than another method or design scheme. To be precise, use of the words such as "example" or "for example" is intended to present a related concept in a specific manner.

A network element in a communication system may send a signal to another network element or receive a signal from another network element. The signal may include information, signaling, data, and the like. The network element may alternatively be replaced with an entity, a network entity, a device, a terminal, a communication module, a node, a communication node, or the like. In this application, the network element is used as an example for description. For example, the communication system may include at least one terminal and at least one network device. The network device may send a downlink signal to the terminal, and/or the terminal may send an uplink signal to the network device. In addition, it may be understood that, if the communication system includes a plurality of terminals, the plurality of terminals may also send a signal to each other. In other words, both a signal sending network element and a signal receiving network element may be terminals.

All or a part of the foregoing embodiments may be implemented by using software, hardware, firmware, or any combination thereof. When a software program is used for implementing the embodiments, all or a part of the embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to the embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or step, and "a" or "one" does not exclude a plurality of cases. A single processor or another unit may implement several functions enumerated in the claims. Some measures are recorded in dependent claims that are different from each other. However, this does not mean that these measures cannot be combined to produce good effects.

It may be understood that, various numbers in embodiments of this application are merely used for differentiation for ease of description, and are not used for limiting the scope of embodiments of this application. Sequence numbers of the foregoing processes do not mean an execution sequence, and the execution sequence of the processes should be determined based on functions and internal logic of the processes.

In the foregoing embodiments, descriptions of the embodiments have respective focuses. For a part that is not described in detail in an embodiment, refer to related descriptions in other embodiments.

Components in the apparatus in embodiments of this application may be combined, divided, and deleted based on an actual requirement. A person skilled in the art may combine or integrate different embodiments or features of different embodiments described in this specification.

In this application, on a premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A downlink carrier switching method, wherein the method comprises:
receiving downlink control information in a primary cell in a first time unit, wherein the downlink control information is used for scheduling transmission of a physical downlink shared channel in a target secondary cell; and
switching from a source secondary cell to the target secondary cell in a second time unit based on the downlink control information, to receive the physical downlink shared channel, wherein the second time unit is an N^{th} time unit after the first time unit, and N is an integer greater than or equal to 0.

2. The method according to claim 1, wherein the method further comprises:
sending first information, wherein the first information comprises a cell switching gap, the cell switching gap indicates time required for switching from the source secondary cell to the target secondary cell, and the cell switching gap is based on a hardware capability of a terminal.

3. The method according to claim 2, wherein N is an integer greater than 0, the second time unit comprises the cell switching gap, and N is associated with at least one of the following: the cell switching gap, an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and
K0 corresponding to the target secondary cell is greater than K0 corresponding to the source secondary cell, wherein K0 is a slot offset between the physical downlink control channel and a physical downlink shared channel scheduled by using the physical downlink control channel.

4. The method according to claim 2, wherein N is an integer greater than 0, the first time unit comprises the cell switching gap, and N is associated with at least one of the following: an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and
K0 corresponding to the target secondary cell is greater than K0 corresponding to the source secondary cell, wherein K0 is a slot offset between the physical downlink control channel and a physical downlink shared channel scheduled by using the physical downlink control channel.

5. The method according to claim 2, wherein N=0, the second time unit comprises the cell switching gap, the downlink control information further comprises a start and length indicator value of the physical downlink shared channel, the start and length indicator value is greater than a first threshold, and the first threshold is associated with the cell switching gap.

6. The method according to any one of claims 1 to 5, wherein the downlink control information comprises an identifier of the target secondary cell.

7. The method according to any one of claims 1 to 6, wherein a quantity of target secondary cells is less than or equal to a maximum quantity of physical downlink shared channels that the terminal can process.

8. A downlink carrier switching method, wherein the method comprises:
sending downlink control information in a primary cell in a first time unit, wherein the downlink control information is used for scheduling transmission of a physical downlink shared channel in a target secondary cell; and
sending the physical downlink shared channel in the target secondary cell in a second time unit based on the downlink control information, wherein the second time unit is an N^{th} time unit after the first time unit, and N is an integer greater than or equal to 0.

9. The method according to claim 8, wherein the method further comprises:
receiving first information, wherein the first information comprises a cell switching gap, the cell switching gap indicates time required for switching from a source secondary cell to the target secondary cell, and the cell switching gap is based on a hardware capability of a terminal.

10. The method according to claim 9, wherein N is an integer greater than 0, the second time unit comprises the cell switching gap, and N is associated with at least one of the following: the cell switching gap, an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and
K0 corresponding to the target secondary cell is greater than K0 corresponding to the source secondary cell, wherein K0 is a slot offset between the physical downlink control channel and a physical downlink shared channel scheduled by using the physical downlink control channel.

11. The method according to claim 9, wherein N is an integer greater than 0, the first time unit comprises the cell switching gap, and N is associated with at least one of the following: an index of a slot in which the downlink control information is located, a numerology index of a carrier or a bandwidth part on which the physical downlink shared channel is located, a numerology index of a carrier or a bandwidth part on which a physical downlink control channel carrying the downlink control information is located, or K0 corresponding to the target secondary cell; and
K0 corresponding to the target secondary cell is greater than K0 corresponding to the source secondary cell, wherein K0 is a slot offset between the physical downlink control channel and a physical downlink shared channel scheduled by using the physical downlink control channel.

12. The method according to claim 9, wherein N=0, the second time unit comprises the cell switching gap, the downlink control information further comprises a start and length indicator value of the physical downlink shared channel, the start and length indicator value is greater than a first threshold, and the first threshold is associated with the cell switching gap.

13. The method according to any one of claims 8 to 12, wherein the downlink control information comprises an identifier of the target secondary cell.

14. The method according to any one of claims 8 to 13, wherein a quantity of target secondary cells is less than or equal to a maximum quantity of physical downlink shared channels that the terminal can process.

15. A communication apparatus, comprising a unit configured to implement the method according to any one of claims 1 to 7, or comprising a unit configured to implement the method according to any one of claims 8 to 14.

16. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 7 or the method according to any one of claims 8 to 14 by using a logic circuit or by executing code instructions.

17. A computer-readable storage medium, wherein the storage medium stores a computer program or instructions; and when the computer program or the instructions are executed by a communication apparatus, the method according to any one of claims 1 to 14 is implemented.

18. A computer program product, wherein the computer program product comprises related program instructions; and when the related program instructions are executed, the method according to any one of claims 1 to 14 is implemented.
